# EUROPEAN PATENT SPECIFICATION

(11) **EP 2 570 943 B1**
(45) Date of publication and mention of the grant of the patent: **05.11.2014**
(21) Application number: 12183810.6
(22) Date of filing: 11.09.2012
(51) Int. Cl.: G06F 21/62, G06F 17/30

(54) **Protection of data privacy in an enterprise system**
Datenschutz in einem Unternehmenssystem
Protection de la confidentialité des données dans un système d'entreprise

(30) Priority: 13.09.2011 US 201113231267
(43) Date of publication of application: 20.03.2013
(73) Proprietor: SAP SE, 69190 Walldorf (DE)
(72) Inventor: Humprecht, Hans-Christian, 69190 Walldorf (DE)
(74) Representative: Richardt Patentanwälte PartG mbB

(56) References cited:
- US-B1- 7 437 362
- Tom Olzak: "General database security guidelines", , 6 September 2007 (2007-09-06), XP55046159, Retrieved from the Internet: URL:http://web.archive.org/web/20100814092 107/http://it.toolbox.com/blogs/adventures insecurity/general-database-security-guide lines-18827 [retrieved on 2012-11-30]
- "Sanitization (classified information)", , 28 November 2010 (2010-11-28), XP55046171, Retrieved from the Internet: URL:http://web.archive.org/web/20101128084 350/http://en.wikipedia.org/wiki/Sanitizat ion_%28classified_information%29 [retrieved on 2012-11-30]

## Description

### Field of the invention

The field relates generally to data management systems. More particularly, the field relates to protection of data privacy.

### Background and related art

Enterprises typically maintain data of several entities such as employees, customers, and suppliers. This data is stored and can be used for several purposes such as for transactions, data collections, analytics and reporting. Some of the stored information can be sensitive or private and required to have access restrictions to comply with statutory data privacy regulations. The relationship between an entity and an enterprise may define the way privacy should be handled. For example, data of an ex-employee needs to be handled differently compared to data of existing employees. Data of an ex-employee may need to be deleted or restricted for limited access. Similarly, data of a barred supplier or a past customer may need to be handled differently compared to existing suppliers or customers. However, sensitive data may not be segregated and is typically stored along with other data. Applications that access stored data consider sensitive and non-sensitive data alike and may disclose sensitive data, leading to privacy issues.

It would therefore be desirable to protect sensitive data to comply with data privacy policies and regulations.

United states patent US 7,437,362 B1 discloses discloses a database system with a security filter for intercepting database streams, such as for a relational database system. The security filter is deployed between the application and the database and inspects the stream of transactions between the application and the database. This implements a data level security between the application and the database. The data level security is applied to either the request to the database or the response. This filtering of the data is only disclosed as being performed by rules. In filtering the requests the rules are applied to the requests and can be used to modify the result to prevent data from being retrieved from the database in the first place. The data is further filtered by applying the rules again and selectively eliminating rows.

Tom Olzak: "General database security guidelines", 6 September 2007, Retreived from internet http://web.archive.org/web/20100814092107/http://it.toolbox.com/blogs.adventuresi nsecurity/general-database-security-guidelines-18827 on 2012-11-30 discloses text from an online blog which describes general database security. This blog mentions data masking briefly and writes "keep the data off the database from the start. Smart users hide sensitive data by overlaying false, realistic-looking values on it so applications using the data continue to work normally, without exposing real data."

"Sanitization (classified information) from Wikipedia and archived by archive.org, 28 November 2010, retrieved from:
http://web.archive.org/web/20101128084350/http://en.wikipedia.org/wiki/Sanitization %28classified information%29, retrieved on 2012-11-30 discloses the sanitization of classified information. This article describes sanitization and redaction in general with relation to paper documents and later to computer media and files. The discussion of computer media and files describes the problems and solutions to redacting a digital document such as a Microsoft Word document or a PDF file.

### Summary

The invention provides for a database system, a computer program product and a method in the independent claims. Embodiments are giving in the dependent claims.

Various embodiments of systems and methods for protection of data privacy in an enterprise system are described herein. A request to access data stored in an electronic database is received by a computer. The data comprises restricted and unrestricted entities. A restricted entity is replaced with one or more masked attributes that protect privacy of the restricted entity. A mask layout comprising the one or more masked attributes is defined for the restricted entity by a system administrator. The one or more masked attributes are then provided to a user in response to the request.

These and other benefits and features of embodiments of the invention will be apparent upon consideration of the following detailed description of preferred embodiments thereof, presented in connection with the following drawings.

As will be appreciated by one skilled in the art, aspects of the present invention may be embodied as an apparatus, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present invention may take the form of a computer program product embodied in one or more computer readable medium(s) having computer executable code embodied thereon.

Any combination of one or more computer readable medium(s) may be utilized. The computer readable medium may be a computer readable signal medium or a computer readable storage medium. A 'computer-readable storage medium' as used herein encompasses any tangible storage medium which may store instructions which are executable by a processor of a computing device. The computer-readable storage medium may be referred to as a computer-readable non-transitory storage medium. The computer-readable storage medium may also be referred to as a tangible computer readable medium. In some embodiments, a computer-readable storage medium may also be able to store data which is able to be accessed by the processor of the computing device. Examples of computer-readable storage media include, but are not limited to: a floppy disk, a magnetic hard disk drive, a solid state hard disk, flash memory, a USB thumb drive, Random Access Memory (RAM), Read Only Memory (ROM), an optical disk, a magneto-optical disk, and the register file of the processor. Examples of optical disks include Compact Disks (CD) and Digital Versatile Disks (DVD), for example CD-ROM, CD-RW, CD-R, DVD-ROM, DVD-RW, or DVD-R disks. The term computer readable-storage medium also refers to various types of recording media capable of being accessed by the computer device via a network or communication link. For example a data may be retrieved over a modem, over the internet, or over a local area network. Computer executable code embodied on a computer readable medium may be transmitted using any appropriate medium, including but not limited to wireless, wireline, optical fiber cable, RF, etc., or any suitable combination of the foregoing.

A computer readable signal medium may include a propagated data signal with computer executable code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

'Computer memory' or 'memory' is an example of a computer-readable storage medium. Computer memory is any memory which is directly accessible to a processor. 'Computer storage' or 'storage' is a further example of a computer-readable storage medium. Computer storage is any non-volatile computer-readable storage medium. In some embodiments computer storage may also be computer memory or vice versa.

A 'processor' as used herein encompasses an electronic component which is able to execute a program or machine executable instruction or computer executable code. References to the computing device comprising "a processor" should be interpreted as possibly containing more than one processor or processing core. The processor may for instance be a multi-core processor. A processor may also refer to a collection of processors within a single computer system or distributed amongst multiple computer systems. The term computing device should also be interpreted to possibly refer to a collection or network of computing devices each comprising a processor or processors. The computer executable code may be executed by multiple processors that may be within the same computing device or which may even be distributed across multiple computing devices.

Computer executable code may comprise machine executable instructions or a program which causes a processor to perform an aspect of the present invention. Computer executable code for carrying out operations for aspects of the present invention may be written in any combination of one or more programming languages, including an object oriented programming language such as Java, Small-talk, C++ or the like and conventional procedural programming languages, such as the "C" programming language or similar programming languages and compiled into machine executable instructions. In some instances the computer executable code may be in the form of a high level language or in a pre-compiled form and be used in conjunction with an interpreter which generates the machine executable instructions on the fly.

The computer executable code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described with reference to flowchart illustrations and/or block diagrams of methods, apparatus (systems) and computer program products according to embodiments of the invention. It will be understood that each block or a portion of the blocks of the flowchart, illustrations, and/or block diagrams, can be implemented by computer program instructions in form of computer executable code when applicable. It is further under stood that, when not mutually exclusive, combinations of blocks in different flowcharts, illustrations, and/or block diagrams may be combined. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functionslacts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

In one aspect the invention provides for a computer implemented method for protecting data privacy, the method comprising: a computer receiving a request to access data stored in an electronic database, wherein the data comprises restricted and unrestricted entities; the computer replacing a restricted entity with one or more masked attributes that protect privacy of the restricted entity, wherein a mask layout comprising the one or more masked attributes is defined for the restricted entity; and the computer providing the one or more masked attributes to a user in response to the request.

In another embodiment the computer implemented method further comprises providing one or more of the unrestricted entities along with the one or more masked attributes if the request corresponds to the restricted and unrestricted entities

In another embodiment the mask layout is defined based on a data privacy policy.

In another embodiment the mask layout is defined for attributes of the restricted entity.

In another embodiment the attributes of the restricted entity comprise a name and dependant data.

In another embodiment the mask layout comprises statuses of replacement of the restricted entities.

In another embodiment the method further comprises receiving the request in response to a user operation in an enterprise system.

In another aspect the invention provides for an article of manufacture including a computer readable storage medium to tangibly store instructions, which when executed by a computer, cause the computer to:
receive a request to access data stored in a database, wherein the data comprises restricted and unrestricted entities;
replace a restricted entity with one or more masked attributes that protect privacy of the restricted entity, wherein a mask layout comprising the one or more masked attributes is defined for the restricted entity; and
provide the one or more masked attributes to a user in response to the request.

In another embodiment the article of manufacture further comprises instructions which when executed by the computer further causes the computer to provide one or more of the unrestricted entities along with the one or more masked attributes if the request corresponds to the restricted and unrestricted entities.

In another embodiment the mask layout is defined based on a data privacy policy.

In another embodiment the mask layout is defined for attributes of the restricted entity.

In another embodiment the attributes of the restricted entity comprise a name and dependant data.

In another embodiment the mask layout comprises statuses of replacement of the restricted entities.

In another embodiment the article of manufacture further comprises instructions which when executed by the computer further causes the computer to receive the request in response to a user operation in an enterprise system.

In another aspect the invention provides for a computer system for protecting data privacy. The computer system comprises:
a computer memory to store program code; and
a processor to execute the program code to:
   receive a request to access data stored in a database, wherein the data comprises restricted and unrestricted entities;
   replace a restricted entity with one or more masked attributes that protect privacy of the restricted entity, wherein a mask layout comprising the one or more masked attributes is defined for the restricted entity; and
   provide the one or more masked attributes to a user in response to the request

In another embodiment the processor further executes the program code to provide one or more of the unrestricted entities along with the one or more masked attributes if the request corresponds to the restricted and unrestricted entities

In another embodiment the mask layout is defined based on a data privacy policy.

In another embodiment the mask layout is defined for attributes of the restricted entity.

In another embodiment the attributes of the restricted entity comprise a name and dependant data.

In another embodiment the mask layout comprises statuses of replacement of the restricted entities.

In another aspect the invention provides for a database system comprising a relational database with at least one data table. The database system further comprises a blocking table comprising a listing of identifiers identifying tuples with one or more blocked attributes. The identifiers may be anything which is used to identify a particular data record or records which are related to a specific entity or individual. For instance the identifiers may be such things as a name, an employee number, a part number, or other reference. The blocking table further comprises a data overlay for redacting the one or more blocked attributes. The tuple comprises a number of attributes and if the tuple is identified as being on or listed in the blocking table then the data overlay may be used to replace that data within the tuple. The blocking table may also be referred to as a mask layout. The data overlay specifies data that will be replaced or overwritten.

The database system further comprises a query engine for performing queries to the relational database. For instance the query engine may use SQL queries to query the relational database. The database system further comprises an application operable for requesting and receiving data from the query engine. The application may be any application which uses data from the relational database to perform a function or operation. The application may be automated or the application may be manually operated to request and received data. The database system further comprises a memory for storing machine-executable instructions for implementing the database system. The database system further comprises a processor for executing the machine-executable instructions. The memory and processor used herein are identified in the singular, however it is understood that reference to a memory and a processor may also be distributed amongst multiple locations and may represent many memories and/or processors.

Execution of the instructions causes the processor to generate a data request using the application. Execution of the instructions further causes the processor to send the data request from the application to the query engine. Next execution of the instructions further cause the processor to generate a database query with the query engine using the request. In some embodiments it is possible that the data request is identical with the query. Execution of the instructions further cause the processor to query the database with the query engine using the database query. Execution of the instructions further cause the processor to generate a database response with the relational database using the database query.

Execution of the instructions causes the processor to send the database response to the query engine. Execution of the instructions further cause the processor to search for an identifier selected from the list of identifiers in a database response. Execution of the instructions further causes the processor to substitute the data overlay for the one or more blocked attributes in the database response if the identifier is found. Execution of the instructions further causes the processor to send the database response to the application. Essentially the processor searches for the identifiers in the blocking table in the database response. If one of the identifiers is identified in the database response then the data overlay is used to redact all or a portion of the blocked attributes. If the processor does not find an identifier in the listing of identifiers in the blocking table then the database response is not modified. In either case the database response is sent to the application. This embodiment may be beneficial because it provides a means of restricting the access to data in the database in a simple manner.

For instance if a database system needs to be operated and a portion of the data needs to be retained but also have access to the data restricted such is the case as is sometimes mandated by data privacy laws then embodiments of the invention may be able to implement such a system.

As used herein masked attributes may also refer to blocked attributes. As used herein data overlay may also refer to mask layout.

In another embodiment execution of the instructions further cause the processor to construct a blocking table search index using the blocking table. The search for an identifier selected from the listing of identifiers in the database response use the blocking table search index. This embodiment may be beneficial because it may greatly increase the speed at which the processor searches the database response to see if any of the identifiers in the listing of identifiers is there.

In another embodiment the data request comprises an identity token. The database system further comprises an allowed access table comprising a listing of allowed identity tokens. Execution of the instructions further cause the processor to compare the identity token to the listing of allowed identity tokens. The step of substituting the data overlay for the one or more block attributes in a database response is skipped if an identity token is found in the listing of allowed identity tokens. This embodiment may be beneficial because it may provide a means to override redaction of the one or more blocked attributes. It would eliminate the need for a database administrator to manually allow access to data which is protected.

An identity token as used herein is any data or identifier which may be used to identify and/or verify the legitimacy of a data request to bypass the redaction caused by the blocking table. For instance the identity token could be a user identification. This could be for instance a login name or an origin of the request. The identity token may also be a password and/or a user and password pair to provided controlled access. The identity token may also a cryptographic key. The identity token may also be a cryptographic signature. For instance the data request may be signed and the identity token may be part of a cryptographic key pair which verifies the signature. The use of a cryptographic key or a cryptographic signature may be beneficial because it provides verification of the access to the database system independent of how secure the database system is.

In another embodiment execution of the instructions further cause the processor to construct an allowed token search index. The allowed token search index is a search index which has been constructed which allows more rapid searching of the allowed identity tokens. The comparison of the identity token to the listing of allowed identity tokens is performed using the allowed token search index.

In another embodiment the database system further comprises a first network connection between the application and the query engine. The data request is sent across the first network connection. The database response is sent across the first network connection.

In another embodiment the database system further comprises a second network connection between the query engine and the relational database. The database is queried using the second network connection. The database response is sent to the query engine using the second network connection.

In another embodiment the database response comprises one or more of the unrestricted entities along with the one or more masked attributes.

In another embodiment the data overlay is defined based on a data privacy policy.

In another embodiment the data overlay is define from attributes of the restricted entity.

In another embodiment the blocked attributes comprise a name and dependent data.

In another embodiment the mask layout comprises statuses of replacement of the restricted entities.

In another aspect the invention provides for a computer program product comprising machine-executable instructions for execution by a processor implementing a database system. The database system comprises a relational database comprising at least one data table. The database system further comprises a blocking table comprising a listing of identifiers identifying tuples with one or more blocked attributes. The blocking table further comprises a data overlay for redacting the one or more blocked attributes. The database system further comprises a query engine for performing queries to the relational database. The database system further comprises an application operable for requesting and receiving data from the query engine. Execution of the instructions further causes the processor to generate a data request using the application.

Execution of the instructions further causes the processor to send the data request from the application to the query engine. Execution of the instructions further cause the processor to generate a database query with the query engine using the request. Execution of the instructions further cause the processor to query the database with the query engine using the database query. Execution of the instructions further cause the processor to generate a database response with the relational database using the database query.

Execution of the instructions further causes the processor to send the database response to the query engine. Execution of the instructions further cause the processor to search for an identifier selected from the list of identifiers in the database response. Execution of the instructions further causes the processor to substitute the data overlay for the one or more blocked attributes in the database response if the identifier is found. Execution of the instructions further causes the processor to send the database response to the application.

In another aspect the invention provides for a method of operating a database system. The method may also be a computer-implemented method. The database system comprises a relational database comprising at least one data table. The database system further comprises a blocking table comprising a listing of identifiers identifying tuples with one or more blocked attributes. The blocking table further comprises a data overlay for redacting the one or more blocked attributes. The database further comprises a query engine for performing queries to the relational database. The database system further comprises an application operable for requesting and receiving data from the query engine. The method comprises the step of generating a data request using the application. The method further comprises the step of sending the data request from the application to the query engine. The method further comprises the step of generating the database query with the query engine using the request. The method further comprises the step of querying the database with the query engine using the database query.

The method further comprises the step of generating a database response with the relational database using the database query. The method further comprises the step of sending the database response to the query engine. The method further comprises the step of searching for an identifier selected from the list of identifiers in the database response. The method further comprises the step of substituting the data overlay for the one or more blocked attributes in the database response if the identifier is found. The method further comprises the step of sending the database response to the application.

In another embodiment the data request is performed in response to a user operation in an enterprise system.

It is understood that one or more claims and/or one or more of the embodiments of the invention may be combined as long as the combined elements are not mutually exclusive.

### Brief description of the drawings

The claims set forth the embodiments of the invention with particularity. The invention is illustrated by way of example and not by way of limitation in the figures of the accompanying drawings in which like references indicate similar elements. The embodiments of the invention, together with its advantages, may be best understood from the following detailed description taken in conjunction with the accompanying drawings.
FIG. 1 is a block diagram of an enterprise system environment, according to one embodiment.
FIG. 2 is a block diagram of a method for protecting data privacy in an enterprise system, according to one embodiment.
FIG. 3 is a block diagram of a user interface displaying a result of query to a database, according to one embodiment.
FIG. 4 is a block diagram of a process for defining a mask layout, according to one embodiment.
FIG. 5 is a block diagram of a scenario where data privacy is protected in an enterprise system environment, according to one embodiment.
FIG. 6 is a block diagram of an exemplary computer system according to one embodiment.
FIG. 7 is a block diagram of a method according to one embodiment.
FIG. 8 is a block diagram illustrating a data base system according to an embodiment.
FIG. 9 is a block diagram illustrating a data base system according to a further embodiment.

### Detailed Description

Embodiments of techniques for protection of data privacy in an enterprise system are described herein. In the following description, numerous specific details are set forth to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

Reference throughout this specification to "one embodiment", "this embodiment" and similar phrases, means that a particular feature, structure, or characteristic described in connection with the embodiment is included in at least one embodiment of the present invention. Thus, the appearances of these phrases in various places throughout this specification are not necessarily all referring to the same embodiment. Furthermore, the particular features, structures, or characteristics may be combined in any suitable manner in one or more embodiments.

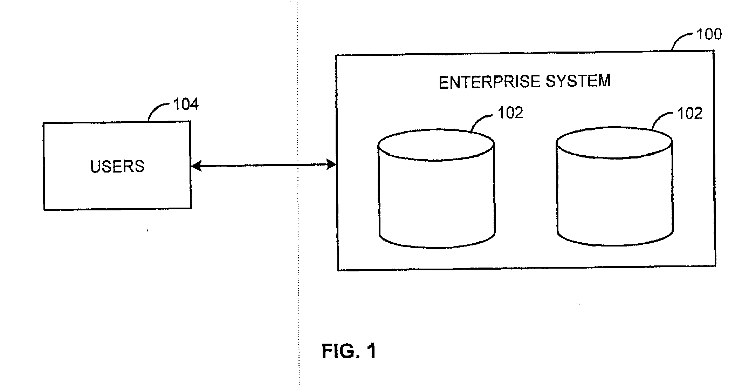

Referring to FIG. 1, an enterprise system 100 is commonly used for managing various functions of a business. Almost all business-related data such as financial data and data of suppliers, customers, and employees is stored in an electronic database 102 of the enterprise system 100. The data can be stored in more than one electronic database 102. In one embodiment, the enterprise system 100 is an Enterprise Resource Planning (ERP) system. Several users 104 access the enterprise system 100. The users 104 can be categorized depending on their role and responsibility, which can define the way the data can be accessed or what data can be accessed. For example, a user from a particular function of a business such as sales division has in-depth access to sales data but may not have ready access to data of other business functions. Similarly, a user from human resources division has access to employee data but may not have ready access to sales data. The users 104 also include a data or system administrator who plays a key role in managing and controlling access to data.

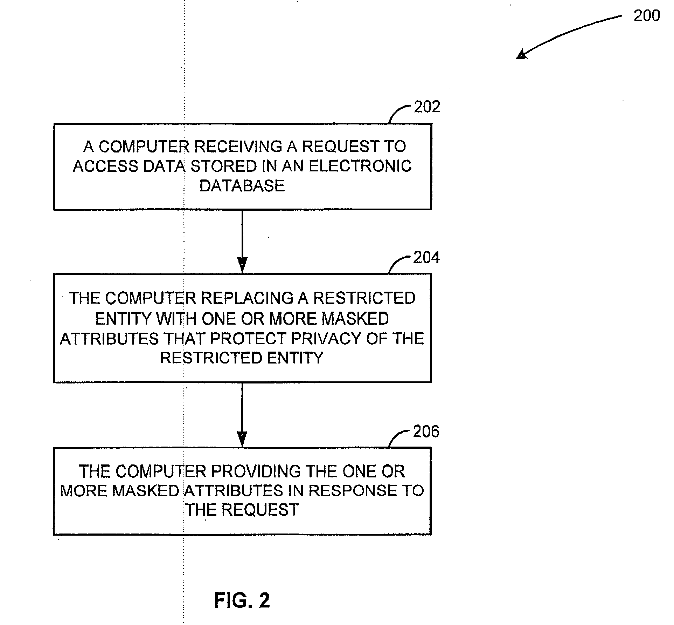

FIG. 2 illustrates an embodiment of a method for protecting data privacy in an enterprise system. Various activities such as reporting, business analytics, business transactions, etc, require access to stored data. Typically, users access an enterprise application and select various options on a user interface to perform such activities. In response to user selections, at 202, a computer receives a request to access data stored in an electronic database. The request indicates what data is required and should be accessed based on the user selections.

The stored data, however, includes both restricted entities and unrestricted entities. An enterprise has relationship with several entities such as an employee, an individual, a customer, and a supplier. The relationship between the enterprise and the entity and a data privacy policy define the way data of the entity should be or will be handled. In one embodiment, the data privacy policy is a statutory policy for protecting data privacy. In another embodiment, the data privacy policy is a custom data privacy policy of the enterprise that is agreed by the entity and complies with the statutory data privacy policy.

Based on the data privacy policy, data of some entities can be sensitive and may not be accessed by all users. Access or viewing restrictions should be in place to protect privacy. Data of entities that should have access restrictions are called as restricted entities. For example, data of an ex-employee needs to have restrictions to prevent inadvertent viewing by a user of an enterprise application. A data privacy policy may require that the data of an ex-employee should be either deleted after formalities or restricted for limited access. Whereas data of existing employees can be viewed by any authorized user, e.g., a human resource professional. Therefore, data of the ex-employee is a restricted entity and data of an existing employee is an unrestricted entity. Similarly, data of a supplier or a customer with whom the enterprise no longer maintains a relationship may need to be protected as per data privacy clauses in an agreement. Such data which needed to be protected is categorized as restricted entities. Data of current suppliers or customers fall into the category of unrestricted entities and can be accessed by any authorized user.

At 204, if the request requires accessing restricted entities, the restricted entities are replaced with one or more masked attributes. These masked attributes are such that they protect the privacy of the restricted entity. For example, a masked attribute can be a word such as "customer blocked" or "blocked user." A masked attribute can be any combination of letters that indicates that the entity is restricted and its information cannot be viewed. To replace a restricted entity an attribute, a system admin should define a mask layout for the restricted entity as soon as an entity is classified as a restricted entity as per a data privacy policy. The mask layout includes one or more masked attributes that conceal the identity or other information of the restricted entity. These masked attributes are assigned to attributes of a restricted entity. For example, the attributes of an ex-employee includes name and other dependant information such as contact information, date of birth, tenure, etc. The system admin defines masked attributes for the attributes of the ex-employee. In one embodiment, a single masked attribute such as "blocked user" can be defined for all the attributes or for the restricted entity as a whole. So whenever there is a request to access data of the ex-employee (e.g., one or more attributes of the ex-employee), the data of the ex-employee is replaced with the masked attribute "blocked user."

As an example, consider that a utility company maintains data of its customers using an enterprise system. Information related to customers can be stored in an electronic database in a plurality of tables. Example of some tables "ORD" and "CUST" are presented below:

| ORD | | |
|---|---|---|
| ID | NAME | ARTICLE |
| 1 | Name 1 | 4711 |
| 2 | Name 2 | 4711 |
| 3 | Name 3 | 4712 |
| 4 | Name 4 | 4772 |
| . | . | . |
| 17 | Name 17 | 4713 |
| . | . | . |
| n | Name n | 4788 |

| CUST | | |
|---|---|---|
| ID | NAME | ADDRESS |
| 1 | Name 1 | Street ... |
| 2 | Name 2 | Street ... |
| 3 | Name 3 | Street ... |
| 4 | Name 4 | Street ... |
| . | . | . |
| 17 | Customer 17 | Street ... |
| . | . | . |
| n | Customer n | Street ... |

The ORD table is a table to store product order details of the customers. The ORD table includes a customer ID column, a customer name column, and an article column for product codes or identifiers. The CUST table stores details of all customers. The details include attributes of customers such as name and address. Consider that the utility company is not doing business with some customers 1, 2, and 17. The private information of customers 1, 2, and 17 may need to be restricted or deleted sometime in the future. A table "CUST_B," as shown below, can be used to define a mask layout.

| CUST_B | | | |
|---|---|---|---|
| ID | NAME | NAME_B | STATUS |
| 1 | Name 1 | Customer blocked | 0 |
| 2 | Name 2 | Customer blocked | 1 |
| 17 | Name 17 | Customer blocked | 1 |

The CUST_B table stores details of customers who need to be restricted. The CUST_B table includes a NAME_B column which stores masked attributes with respect to the attributes (i.e. names) of the customer. The mask layout also includes statuses for replacing the restricted entity with a masked attribute. The CUST_B table includes a status column for defining the statuses for the restricted entities. As an example, a status '1' for a customer indicates that the customer is in a blocking period, meaning that the customer data or attribute (e.g., name) should be replaced with the masked attribute "Customer blocked". A status '0' for a customer indicates that the blocking period for that customer has not yet started. A system administrator or a person responsible for data protection defines these statuses and also adds or deletes customers from CUST_B table based on a data privacy policy.

With a defined masked layout in place, after a request is received, the restricted entities which are in the CUST_B table and have status '1' are replaced with corresponding masked attributes. The masked attributes along with any unrestricted entities are provided to the user at 206. In one embodiment, a filter is used to replace the restricted entities. The following statement in Structured Query Language (SQL) syntax shows an example of a filter that replaces a restricted entity.
**SELECT**
Ord.ID,Article,Adress
**CASE**
WHEN Status = 1 THEN Name_b ELSE Name
**END**
**AS Masked_Name**
**FROM**
Ord INNER JOIN Cust
**ON**
Ord.ID = Cust.ID LEFT OUTER JOIN Cust_b
**ON**
Ord.Name = Cust_b.Name

The filter is an SQL query for presenting data while replacing the restricted entities. The SQL query is generated in response to a user operation. The SELECT statement selects data from tables that are stored in the database. The result from the select statement is stored in a result-set. The SQL CASE statement is used to manipulate the presentation of data without updating or changing the data in a table and the value of the field "Masked_Name" depends on the CASE statement. The SQL JOIN clauses enable to select data from a plurality of tables. When the status column for a customer in CUST_B table is '1,' the name of that customer is replaced with a masked attribute that is in the CUST_B table.

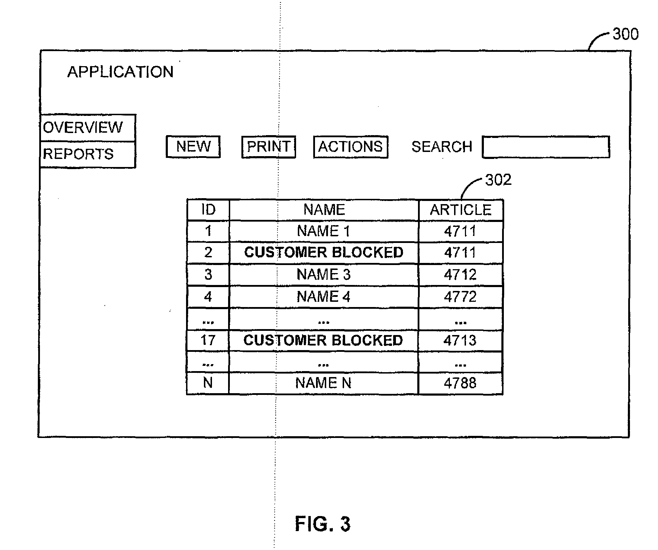

Referring to FIG. 3, the result list of the above SQL query is presented on a user interface 300 of an enterprise application. The result list 302 includes unrestricted entities such as names of customers 1, 3 and 4 and masked attributes (customer blocked) of the restricted entities, i.e. customer 2 and 17. Since the status of customer '1' is set to '0,' in one embodiment, it is not fully qualified as a restricted entity for data privacy protection and therefore displayed without any masked attributes.

The above-described approach can be applied to several scenarios. For example, the approach can be applied to employees of an organization. A table such as Employee_B can be created for restricted entities to define a masked layout. The restricted entities are ex-employees who left the organization or employees who are about to leave the organization. Masked attributes such as "Blocked User" or "Data restricted" can be assigned to the restricted entities. Similar approach can be used for suppliers or any other entity whose data is stored in the database of an enterprise system.

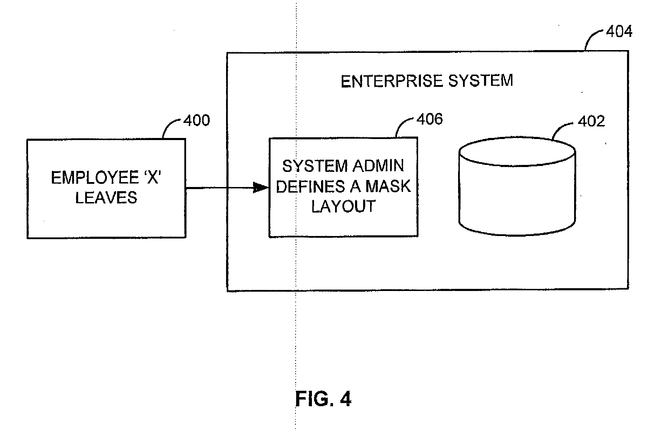

FIG. 4 illustrates an embodiment of a process for defining a mask layout in a business environment. When an entity such as an employee leaves 400 an organization, a system administrator is notified. Data of the employees is stored in an electronic database 402 of an enterprise system 404. In one embodiment, the enterprise system 404 is an on-premise system situated in one of the premises of the organization. The system administrator then defines a mask layout 406 for that employee in the enterprise system 404 by creating a table for defining the mask layout or by adding that employee in an existing table for defining the mask layout as described previously.

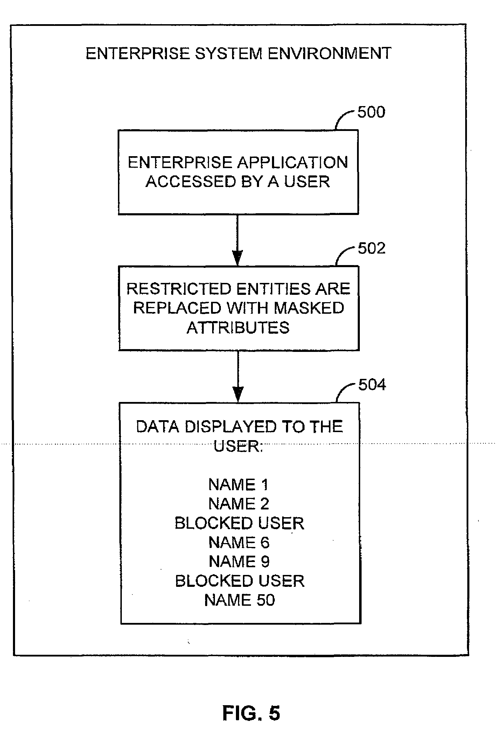

Referring to FIG. 5, several users of the organization use enterprise applications for various purposes. A user accesses an enterprise application 500 and selects various options to access data. A request for data is then created following user selections. If the requested data includes restricted entities for which a system administrator defined a masked layout, as described in reference to FIG. 4, then the restricted entities are replaced with masked attributes 502. Data is then displayed to the user 504. The displayed data 504 includes unrestricted entities and masked attributes of the restricted entities. For unrestricted entities, attributes such as names (e.g., Name 1, Name 2, etc) and other dependant data are displayed. As described previously, masked attributes can include "Blocked User" or other characters that are defined by the system administrator in the mask layout.

Some embodiments of the invention may include the above-described methods being written as one or more software components. These components, and the functionality associated with each, may be used by client, server, distributed, or peer computer systems. These components may be written in a computer language corresponding to one or more programming languages such as, functional, declarative, procedural, object-oriented, lower level languages and the like. They may be linked to other components via various application programming interfaces and then compiled into one complete application for a server or a client. Alternatively, the components maybe implemented in server and client applications. Further, these components may be linked together via various distributed programming protocols. Some example embodiments of the invention may include remote procedure calls being used to implement one or more of these components across a distributed programming environment. For example, a logic level may reside on a first computer system that is remotely located from a second computer system containing an interface level (e.g., a graphical user interface). These first and second computer systems can be configured in a server-client, peer-to-peer, or some other configuration. The clients can vary in complexity from mobile and handheld devices, to thin clients and on to thick clients or even other servers.

The above-illustrated software components are tangibly stored on a computer readable storage medium as instructions. The term "computer readable storage medium" should be taken to include a single medium or multiple media that stores one or more sets of instructions. The term "computer readable storage medium" should be taken to include any physical article that is capable of undergoing a set of physical changes to physically store, encode, or otherwise carry a set of instructions for execution by a computer system which causes the computer system to perform any of the methods or process steps described, represented, or illustrated herein. Examples of computer readable storage media include, but are not limited to: magnetic media, such as hard disks, floppy disks, and magnetic tape; optical media such as CD-ROMs, DVDs and holographic devices; magneto-optical media; and hardware devices that are specially configured to store and execute, such as application-specific integrated circuits ("ASICs"), programmable logic devices ("PLDs") and ROM and RAM devices. Examples of computer readable instructions include machine code, such as produced by a compiler, and files containing higher-level code that are executed by a computer using an interpreter. For example, an embodiment of the invention may be implemented using Java, C++, or other object-oriented programming language and development tools. Another embodiment of the invention may be implemented in hard-wired circuitry in place of, or in combination with machine readable software instructions.

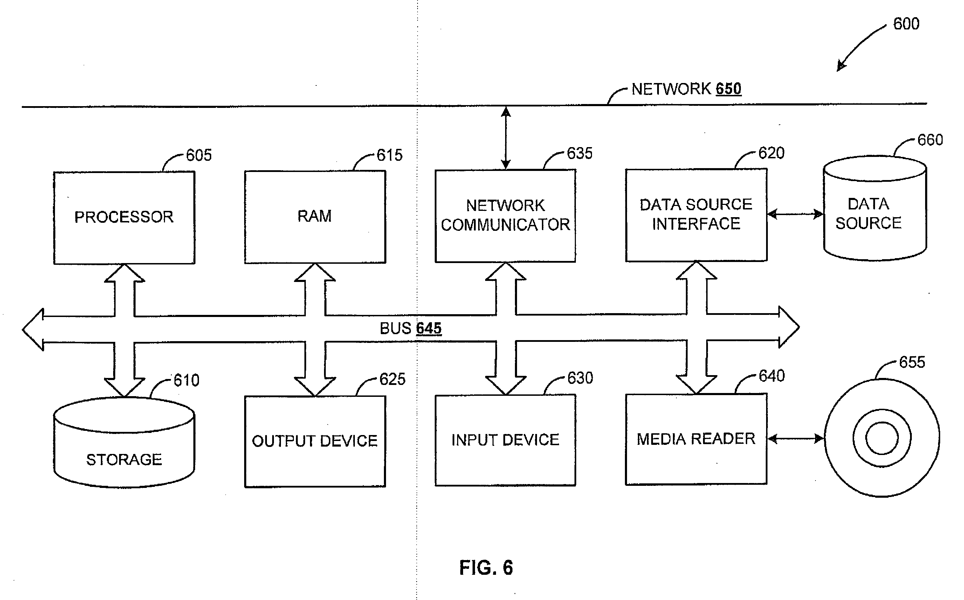

FIG. 6 is a block diagram of an exemplary computer system 600. The computer system 600 includes a processor 605 that executes software instructions or code stored on a computer readable storage medium 655 to perform the above-illustrated methods of the invention. The computer system 600 includes a media reader 640 to read the instructions from the computer readable storage medium 655 and store the instructions in storage 610 or in random access memory (RAM) 615. The storage 610 provides a large space for keeping static data where at least some instructions could be stored for later execution. The stored instructions may be further compiled to generate other representations of the instructions and dynamically stored in the RAM 615. The processor 605 reads instructions from the RAM 615 and performs actions as instructed. According to one embodiment of the invention, the computer system 600 further includes an output device 625 (e.g., a display) to provide at least some of the results of the execution as output including, but not limited to, visual information to users and an input device 630 to provide a user or another device with means for entering data and/or otherwise interact with the computer system 600. Each of these output devices 625 and input devices 630 could be joined by one or more additional peripherals to further expand the capabilities of the computer system 600. A network communicator 635 may be provided to connect the computer system 600 to a network 650 and in turn to other devices connected to the network 650 including other clients, servers, data stores, and interfaces, for instance. The modules of the computer system 600 are interconnected via a bus 645. Computer system 600 includes a data source interface 620 to access data source 660. The data source 660 can be accessed via one or more abstraction layers implemented in hardware or software. For example, the data source 660 may be accessed by network 650. In some embodiments the data source 660 may be accessed via an abstraction layer, such as, a semantic layer.

A data source is an information resource. Data sources include sources of data that enable data storage and retrieval. Data sources may include databases, such as, relational, transactional, hierarchical, multi-dimensional (e.g., OLAP), object oriented databases, and the like. Further data sources include tabular data (e.g., spreadsheets, delimited text files), data tagged with a markup language (e.g., XML data), transactional data, unstructured data (e.g., text files, screen scrapings), hierarchical data (e.g., data in a file system, XML data), files, a plurality of reports, and any other data source accessible through an established protocol, such as, Open DataBase Connectivity (ODBC), produced by an underlying software system (e.g., ERP system), and the like. Data sources may also include a data source where the data is not tangibly stored or otherwise ephemeral such as data streams, broadcast data, and the like. These data sources can include associated data foundations, semantic layers, management systems, security systems and so on.

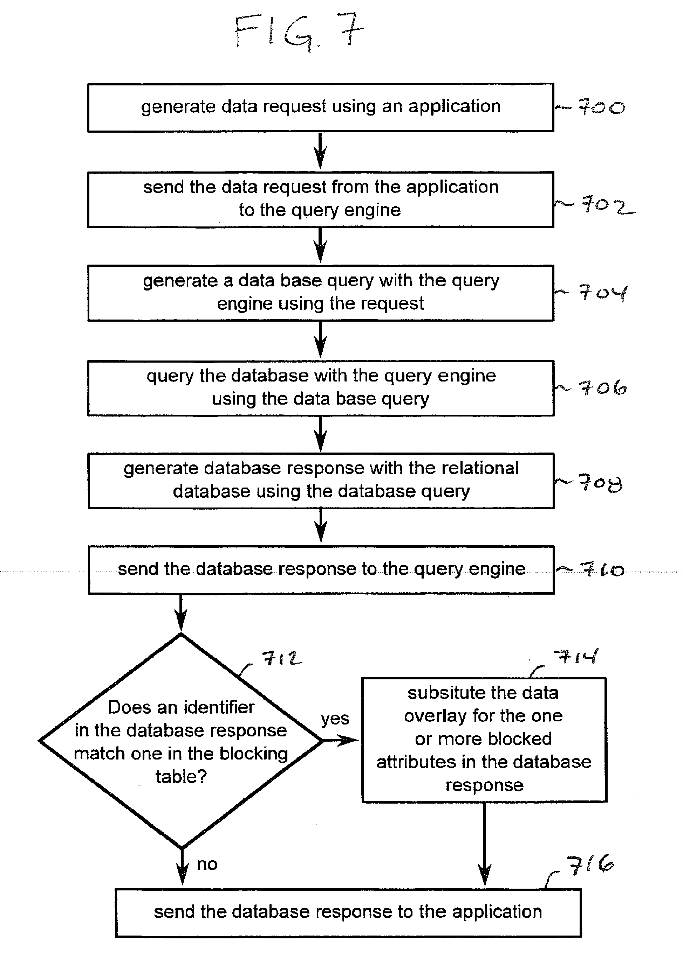

FIG. 7 shows a flow diagram which illustrates a method according to the invention. First in step 700 a data request is generated using an application. Next in step 702 a data request is sent from the application to the query engine. This may be across a network or it may be performed internally within one computer system. Next in step 704 a database query is generated by the query engine using the request. Next in step 706 the database is queried by the query engine using the database query. This of course may also be performed within a single machine or across a network depending upon the particular embodiment. Next in step 708 a database response is generated using the relational database using the database query.

Next in step 710 the relational database sends the database response to the query engine. Step 712 is a decision box and in this step it is determined does an identifier in the database response match one in the blocking table. If an identifier is found that matches one in the blocking table then the method proceeds to step 714. In this step the data overlay is substituted for one or more blocked attributes in the database response. This effectively redacts the one or more blocked attributes. Then the method proceeds to step 716 and the database response is sent to the application. If however in step 712 an identifier in the database response is not found in the blocking table then the method proceeds directly to step 716 and the database response is sent to the application. In this branch there is no redaction of attributes in the database response.

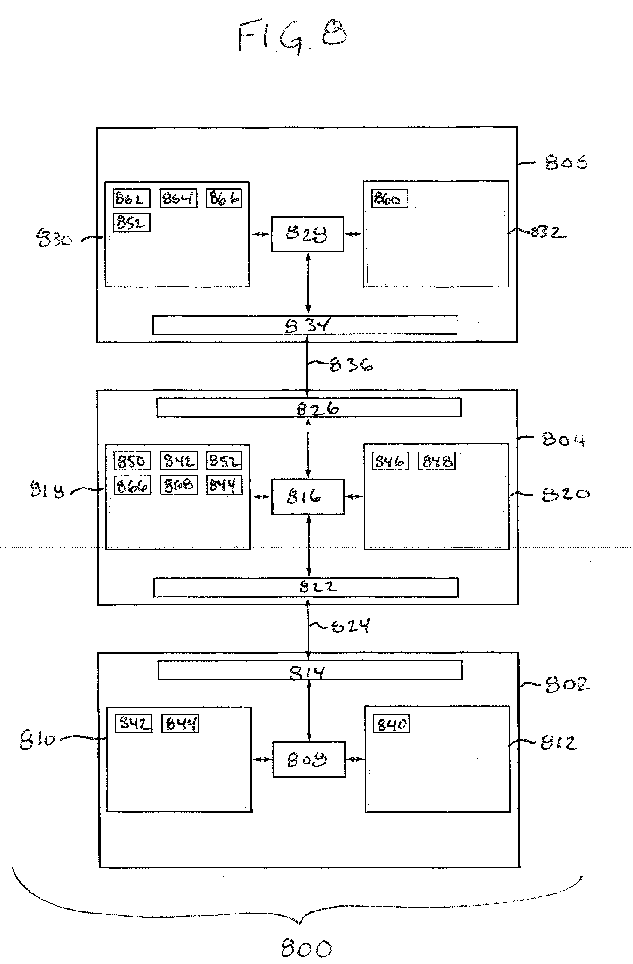

FIG. 8 illustrates a database system 800 according to an embodiment of the invention. In this embodiment there are three computers shown, an application server 802, a query engine server 804, and a database server 806. The use of three different computers is purely for the purpose of illustration. In some embodiments there may be more computers that are used or also in some embodiments there also may be a single computer may implement the entire database system. In this example the application server 802 comprises a processor 808 that is connected to a computer storage 810 and a computer memory 812. A processor 808 is further able to communicate with a network adaptor 814.

The query engine server 804 also comprises a processor 816. The processor 816 is connected to a computer storage 818 and a computer memory 820. The processor 816 is further connected to network adaptors 822 and 826. The network adaptor 822 and network adaptor 816 are used to form a first network connection 824. This enables data to be shared between the application server 802 and the query engine server 804.

The database server 806 is shown as also containing a processor 828. The processor 828 is connected to computer storage 830 and computer memory 832. The processor 826 is also connected to a network adaptor 834. The network adaptor 834 and 826 are shown as forming a second network connection 836. In some embodiments the network adaptor 822 and 826 may be identical.

The computer memory 812 of the application server 802 is shown as containing an application 840. The application 840 is able to generate a data request 842. A copy of the data request 842 is shown in the computer storage 810. The computer storage 810 also shows a redacted database response 844 which was received from the query engine server 804.

The query engine server 804 has a memory 820 which is shown as containing a query engine 846 and code which modifies the query engine 848. The code 848 contains code 816 which modifies the query engine 846 to use the blocking table 850. The query engine 846 receives the data request 842 and generates a database query 852. The database query 852 is shown as being stored in the computer storage 818. The database query 852 is then used by the query engine 846 to query the database server. The memory 832 of the database server 806 is shown as containing code for implementing a relational database 860. The computer storage 830 shows a database table A 862 and database table B 864. These are the database tables used by the relational database 860.

The computer storage 830 is also shown as containing the database query 852 received from the query engine server 804. The relational database 860 then uses the database query 852 to retrieve data from the database tables 862, 864 and generate the database response 866. The database response 866 is then passed back to the query engine server 804. A copy of the database response 866 is shown in the computer storage 818. The modified code 848 is then used to compare the database response 866 to the blocking table 850. If an identifier is found then the modified code 848 uses a data overlay 868 to redact a portion of the database response 866. This generates the redacted database response 844. A copy of the redacted database response 844 is shown in computer storage 818. The query engine server 804 then sends this to the application server 802. The application 840 may then respond to the redacted database response 844.

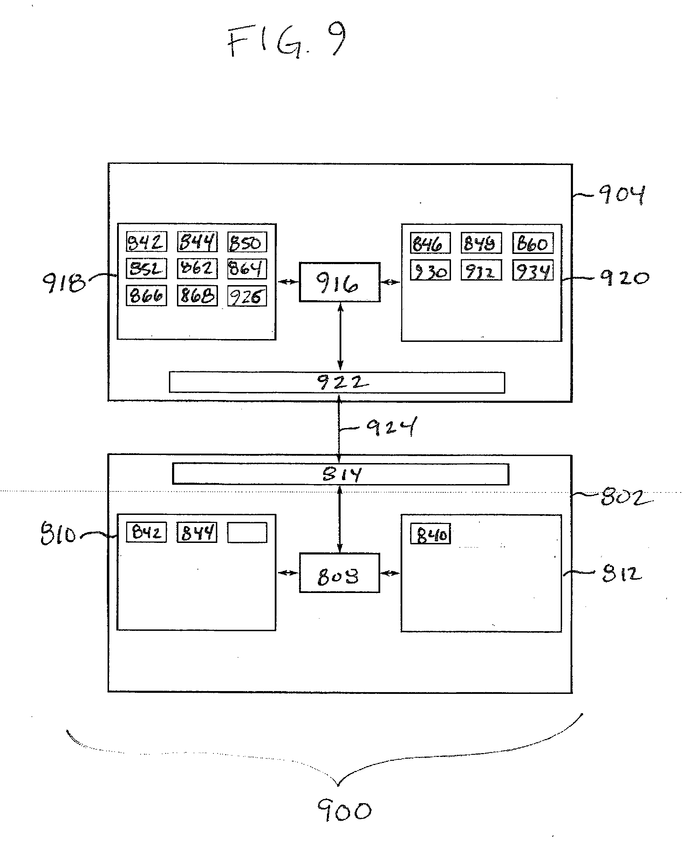

FIG. 9 shows a block diagram illustrating a further embodiment of a database system 900. The database system 900 is similar to the database system shown in FIG. 8. In this embodiment the database server 806 and query engine server 804 of FIG. has been combined into a single server 904.

The server 904 comprises a processor 916 connected to a network connection 922, a computer storage 918, and computer memory 920. The database system 900 may also be implemented by more or fewer computers.

The server 904 also comprises a processor 916. The processor 916 is connected to a computer storage 918 and a computer memory 920. The processor 916 is further connected to network adaptors 922. The network adaptor 922 and network adaptor 816 are used to form a network connection 924. This enables data to be shared between the application server 802 and the server 904.

The computer memory 902 and its contents is equivalent to the computer memories 820 and 832 in FIG. 8. The computer storage 818 and its contents are equivalent to the computer storage 818 and 830 in FIG. 8. Instead of data being shared across network connection 836 between servers 804 and 806, data is shared internally within server 904.

The computer storage is shown as containing an allowed access table 926 which contains a listing of allowed identity tokens. The identity tokens are used to indicate the origin of specific data requests which by pass the data overlay process. When the step of substituting the data overlay for the one or more attributes in the database response is skipped if an identity token associated with a data request is found in the allowed access table 926.

The computer memory 920 is shown as further containing several optional elements, a search index generation module 930. The search index generation module 930 contains computer executable code which enables the processor to generate search indexes. The computer memory 920 is shown as containing an optional blocking table search index 932 and an optional allowed token search index 934. The blocking table search indeed 932 is used to speed the search of the blocking table 850 and the identity token search index is sued to speed the search of the allowed access table 926. The search index generation module 930 used the blocking table 850 to construct the blocking table search index 932. The search index generation module 930 was used to generate the allowed token search index 934 using the allowed access table 926.

In the above description, numerous specific details are set forth to provide a thorough understanding of embodiments of the invention. One skilled in the relevant art will recognize, however that the invention can be practiced without one or more of the specific details or with other methods, components, techniques, etc. In other instances, well-known operations or structures are not shown or described in details to avoid obscuring aspects of the invention.

Although the processes illustrated and described herein include series of steps, it will be appreciated that the different embodiments of the present invention are not limited by the illustrated ordering of steps, as some steps may occur in different orders, some concurrently with other steps apart from that shown and described herein. In addition, not all illustrated steps may be required to implement a methodology in accordance with the present invention. Moreover, it will be appreciated that the processes may be implemented in association with the apparatus and systems illustrated and described herein as well as in association with other systems not illustrated.

The above descriptions and illustrations of embodiments of the invention, including what is described in the Abstract, is not intended to be exhaustive or to limit the invention to the precise forms disclosed. While specific embodiments of, and examples for, the invention are described herein for illustrative purposes, various equivalent modifications are possible within the scope of the invention, as those skilled in the relevant art will recognize. These modifications can be made to the invention in light of the above detailed description. Rather, the scope of the invention is to be determined by the following claims, which are to be interpreted in accordance with established doctrines of claim construction.

### List of reference numerals

- 100: enterprise system
- 102: electronic database
- 104: users
- 300: user interface
- 302: result list
- 400: employee leaves
- 402: electronic database
- 404: enterprise system
- 406: mask layout
- 500: enterprise application
- 502: masked attributes
- 504: displayed data
- 600: computer system
- 605: processor
- 610: storage
- 615: random access memory (RAM)
- 620: data source interface
- 625: output device
- 630: input device
- 635: network communicator
- 640: media reader
- 645: bus
- 650: network
- 655: computer readable storage medium
- 660: data source
- 800: database system
- 802: application server
- 804: query engine server
- 806: database server
- 808: processor
- 810: computer storage
- 812: computer memory
- 814: network adaptor
- 816: processor
- 818: computer storage
- 820: computer memory
- 822: network adaptor
- 824: first network connection
- 826: network adaptor
- 828: processor
- 830: computer storage
- 832: computer memory
- 834: network adaptor
- 836: second network connection
- 840: application
- 842: data request
- 844: redacted database response
- 846: query engine
- 848: query engine modifications
- 850: blocking table
- 852: data base query
- 860: relational database
- 862: database table A
- 864: database table B
- 866: database response
- 868: data overlay
- 900: database system
- 904: server
- 916: processor
- 918: computer storage
- 920: computer memory
- 922: network adaptor
- 924: network connection
- 926: allowed access table
- 930: search index generation module
- 932: blocking table search index
- 934: allowed token search index

## Claims

1. A database system (100, 404, 600, 800) comprising:
- a relational database (102, 402, 860) comprising at least one data table (862, 864);
- a blocking table (850) comprising a listing of identifiers identifying tuples with one or more blocked attributes, wherein the blocking table further comprises a data overlay (406, 868) for redacting the one or more blocked attributes;
- a query engine (846, 848) for performing queries to the relational database;
- an application (840) operable for requesting and receiving data from the query engine;
- a memory (610, 615, 812, 820, 832) for storing machine executable instructions (840, 846, 848, 860) for implementing the database system; and
- a processor (605, 808, 816, 828, 916) for executing the machine executable instructions, wherein execution of the instructions cause the processor to:
- construct a blocking table search index (932) using the blocking table;
- generate (700) a data request (842) using the application;
- send (702, 202) the data request from the application to the query engine;
- generate (704) a data base query with the query engine using the request;
- query (706) the database with the query engine using the data base query;
- generate (708) a database response (866) with the relational database using the database query;
- send (710) the database response to the query engine;
- search (712) for an identifier selected from the listing of identifiers in the database response, wherein the search for an identifier selected from the listing of identifiers in the database response uses the blocking table search index;
- substitute (714, 204) the data overlay for the one or more blocked attributes in the database response if the identifier is found;
- send (716, 206) the database response (866, 844) to the application.

2. The database system of claim 1, wherein the data request comprises an identity token, wherein the database system further comprises an allowed access table (926) comprising a listing of allowed identity tokens, wherein execution of the instructions further causes the processor to compare the identity token to the listing of allowed identity tokens, wherein the step of substituting the data overlay for the one or more blocked attributes in the database response is skipped if the identity token is found in the listing of allowed identity tokens.

3. The database system of claim 2, wherein the identity token is any one of the following: a user identification, a password, a cryptographic key, a cryptographic signature, and combinations thereof.

4. The database system of claim 2 or 3, wherein the wherein execution of the instructions further cause the processor to construct an allowed token search index (934), wherein the comparison of the identity token to the listing of allowed identity tokens is performed using the allowed token search index.

5. The database system of any one of the preceding claims, wherein the database system comprises a first network connection (824) between the application and the query engine, wherein the data request is sent across the first network connection, and wherein the data base response is sent across the first network connection.

6. The database system of of any one of the preceding claims, wherein the data base system further comprises a second network connection (836) between the query engine and the relational database, and wherein the database is queried using the second network connection, and wherein the database response is sent to the query engine using the second network connection.

7. The database system of any one of the preceding claims, wherein the data overlay is defined based on a data privacy policy.

8. The database system of any one of the preceding claims, wherein the blocked attributes comprise a name and dependent data.

9. A computer program product comprising machine executable instructions for execution by a processor (605, 808, 816, 828, 916) implementing a database system (100, 404, 600, 800, 900), wherein the database system comprises a relational database (102, 402, 860) comprising at least one data table (862, 864), wherein the database system further comprises a blocking table (850) comprising a listing of identifiers identifying tuples with one or more blocked attributes, wherein the blocking table further comprises a data overlay (406, 868) for redacting the one or more blocked attributes, wherein the database system further comprises a query engine (846, 848) for performing queries to the relational database, wherein the database system further comprises an application (840) operable for requesting and receiving data from the query engine, wherein execution of the instructions cause the processor to:
- construct a blocking table search index (932) using the blocking table;
- generate (700) a data request (842) using the application;
- send (702, 202) the data request from the application to the query engine;
- generate (704) a data base query with the query engine using the request;
- query (706) the database with the query engine using the data base query;
- generate (708) a database response (866) with the relational database using the database query;
- send (710) the database response to the query engine;
- search (712) for an identifier selected from the listing of identifiers in the database response, wherein the search for an identifier selected from the listing of identifiers in the database response uses the blocking table search index;
- substitute (714, 204) the data overlay for the one or more blocked attributes in the database response if the identifier is found;
- send (716, 206) the database response (866, 844) to the application.

10. A method of operating a database system (100, 404, 600, 800, 900), wherein the database system comprises a relational database (102, 402, 860) comprising at least one data table (862, 864), wherein the database system further comprises a blocking table (850) comprising a listing of identifiers identifying tuples with one or more blocked attributes, wherein the blocking table further comprises a data overlay (406, 868) for redacting the one or more blocked attributes, wherein the database system further comprises a query engine (846, 848) for performing queries to the relational database, wherein the database system further comprises an application (840) operable for requesting and receiving data from the query engine, wherein the method comprises the steps of:
- construct a blocking table search index (932) using the blocking table;
- generating (700) a data request (842) using the application;
- sending (702, 202) the data request from the application to the query engine;
- generating (704) a data base query with the query engine using the request;
- querying (706) the database with the query engine using the data base query;
- generating (708) a database response (866) with the relational database using the database query;
- sending (710) the database response to the query engine;
- searching (712) for an identifier selected from the listing of identifiers in the database response, wherein the search for an identifier selected from the listing of identifiers in the database response uses the blocking table search index;
- substituting (714, 204) the data overlay for the one or more blocked attributes in the database response if the identifier is found; and
- sending (716, 206) the database response (866, 844) to the application.

11. The method of claim 10, wherein the data request is performed in response to a user operation in an enterprise system.

## Patentansprüche

1. Datenbanksystem (100, 404, 600, 800), umfassend:
- eine relationale Datenbank (102, 402, 860), die mindestens eine Datentabelle (862, 864) umfasst;
- eine Sperrtabelle (850), die eine Auflistung von Identifikatoren umfasst, die Tupel mit einem oder mehreren gesperrten Attributen identifizieren, wobei die Sperrtabelle ferner ein Daten-Overlay (406, 868) zum Redigieren des einen oder der mehreren gesperrten Attribute umfasst;
- eine Abfragemaschine (846, 848) zur Durchführung von Abfragen an der relationalen Datenbank;
- eine Anwendung (840), die dazu dient, Daten von der Abfragemaschine abzurufen und zu empfangen;
- einen Speicher (610, 615, 812, 820, 832) zum Speichern von maschinenausführbaren Befehlen (840, 846, 848, 860) zum Implementieren des Datenbanksystems; und
- einen Prozessor (605, 808, 816, 828, 916) zum Ausführen der maschinenausführbaren Befehle, wobei die Ausführung der Befehle bewirkt, dass der Prozessor:
- einen Sperrtabellensuchindex (932) unter Verwendung der Sperrtabelle konstruiert;
- einen Datenabruf (842) unter Verwendung der Anwendung erzeugt (700);
- den von der Anwendung kommenden Datenabruf an die Abfragemaschine schickt (702, 202);
- eine Datenbankabfrage mit der Abfragemaschine unter Verwendung des Abrufs erzeugt (704);
- die Datenbank mit der Abfragemaschine unter Verwendung der Datenbankabfrage befragt (706);
- eine Datenbankantwort (866) mit der relationalen Datenbank unter Verwendung der Datenbankabfrage erzeugt (708) ;
- die Datenbankantwort an die Abfragemaschine sendet (710) ;
- nach einem Identifikator sucht (712), der ausgewählt ist aus der Auflistung der Identifikatoren in der Datenbankantwort, wobei die Suche nach einem Identifikator, der aus der Auflistung von Identifikatoren in der Datenbankantwort ausgewählt ist, den Sperrtabellensuchindex verwendet;
- das Daten-Overlay für das eine oder die mehreren gesperrten Attribute in der Datenbankantwort substituiert (714, 204), wenn der Identifikator gefunden wird;
- die Datenbankantwort (866, 844) an die Anwendung sendet (716, 206).

2. Datenbanksystem nach Anspruch 1, wobei der Datenbankabruf ein Identitäts-Token umfasst, wobei das Datenbanksystem ferner eine Zugriffserlaubnistabelle (926) umfasst, die eine Auflistung zulässiger Identitäts-Tokens umfasst, wobei die Ausführung der Befehle ferner bewirkt, dass der Prozessor das Identitäts-Token mit der Auflistung von zulässiger Identitäts-Tokens vergleicht, wobei der Schritt des Substituierens des Daten-Overlay für das eine oder die mehreren gesperrten Attribute in der Datenbankantwort übersprungen wird, wenn das Identitäts-Token in der Auflistung zulässiger Identitäts-Tokens gefunden wird.

3. Datenbanksystem nach Anspruch 2, wobei das Identitäts-Token eines der folgenden ist: eine Nutzeridentifikation, ein Passwort, ein kryptografischer Schlüssel, eine kryptografische Signatur und Kombinationen davon.

4. Datenbanksystem nach Anspruch 2 oder 3, wobei die Ausführung der Befehle ferner bewirkt, dass der Prozessor einen Suchindex (934) für zulässige Tokens konstruiert, wobei der Vergleich des Identitäts-Tokens mit der Auflistung zulässiger Identitäts-Tokens unter Verwendung des Suchindex für zulässige Tokens durchgeführt wird.

5. Datenbanksystem nach einem der vorangehenden Ansprüche, wobei das Datenbanksystem eine erste Netzanbindung (824) zwischen der Anwendung und der Abfragemaschine umfasst, wobei der Datenabruf über die erste Netzanbindung geschickt wird, und wobei die Datenbankantwort über die erste Netzanbindung geschickt wird.

6. Datenbanksystem nach einem der vorangehenden Ansprüche, wobei das Datenbanksystem ferner eine zweite Netzanbindung (836) zwischen der Abfragemaschine und der relationalen Datenbank umfasst, und wobei die Datenbank unter Verwendung der zweiten Netzanbindung befragt wird, und wobei die Datenbankanwort unter Verwendung der zweiten Netzanbindung an die Abfragemaschine geschickt wird.

7. Datenbanksystem nach einem der vorangehenden Ansprüche, wobei das Daten-Overlay auf Basis von Datenschutzrichtlinien definiert ist.

8. Datenbanksystem nach einem der vorangehenden Ansprüche, wobei die gesperrten Attribute einen Namen und abhängige Daten umfassen.

9. Computerprogrammprodukt, maschinenausführbare Befehle zur Ausführung durch einen Prozessor (605, 808, 816, 828, 916) umfassend, der ein Datenbanksystem (100, 404, 600, 800, 900) implementiert, wobei das Datenbanksystem eine relationale Datenbank (102, 402, 860) umfasst, die mindestens eine Datentabelle (862, 864) umfasst, wobei das Datenbanksystem ferner eine Sperrtabelle (850) umfasst, die eine Auflistung von Identifikator-Tupeln mit einem oder mehreren gesperrten Attributen umfasst, wobei die Sperrtabelle ferner ein Daten-Overlay (406, 868) zum Redigieren des einen oder der mehreren gesperrten Attribute umfasst, wobei das Datenbanksystem ferner eine Abfragemaschine (846, 848) umfasst, um Abfragen an der relationalen Datenbank durchzuführen, wobei das Datenbanksystem 10 ferner eine Anwendung (840) umfasst, die dazu dient, Daten von der Abfragemaschine abzurufen und zu empfangen, wobei die Ausführung der Befehle bewirkt, dass der Prozessor:
- einen Sperrtabellensuchindex (932) unter Verwendung der Sperrtabelle konstruiert;
- einen Datenabruf (842) unter Verwendung der Anwendung erzeugt (700);
- den von der Anwendung kommenden Datenabruf zur Abfragemaschine sendet (702, 202);
- eine Datenbankabfrage mit der Abfragemaschine unter Verwendung des Abrufs erzeugt (704);
- die Datenbank mit der Abfragemaschine unter Verwendung der Datenbankabfrage befragt (706);
- eine Datenbankantwort (866) mit der relationalen Datenbank unter Verwendung der Datenbankabfrage erzeugt (708);
- die Datenbankantwort an die Abfragemaschine sendet (710);
- nach einem Identifikator (712) sucht, der ausgewählt ist aus der Auflistung der Identifikatoren in der Datenbankantwort, wobei die Suche nach einem Identifikator, der aus der Auflistung von Identifikatoren in der Datenbankantwort ausgewählt ist, den Sperrtabellensuchindex verwendet;
- das Daten-Overlay für das eine oder die mehreren gesperrten Attribute in der Datenbankantwort substituiert (714, 204), wenn der Identifikator gefunden wird;
- die Datenbankantwort (866, 844) an die Anwendung sendet (716, 206).

10. Verfahren zum Betreiben eines Datenbanksystems (100, 404, 600, 800, 900), wobei das Datenbanksystem eine relationale Datenbank (102, 402, 860) umfasst, die mindestens eine Datentabelle (862, 864) umfasst, wobei das Datenbanksystem ferner eine Sperrtabelle (850) umfasst, die eine Auflistung von Identifikatoren umfasst, die Tupeln mit einem oder mehreren gesperrten Attributen identifizieren, wobei die Sperrtabelle ferner eine Daten-Overlay (406, 868) zum Redigieren des einen oder der mehreren gesperrten Attribute umfasst, wobei das Datenbanksystem ferner eine Abfragemaschine (846, 848) umfasst, um Abfragen an der relationalen Datenbank durchzuführen, wobei das Datenbanksystem ferner eine Anwendung (840) umfasst, die dazu dient, Daten von der Abfragemaschine abzurufen und zu empfangen, wobei das Verfahren die folgenden Schritte umfasst:
- Konstruieren eines Sperrtabellensuchindex (932) unter Verwendung der Sperrtabelle;
- Erzeugen (700) eines Datenabrufs (842) unter Verwendung der Anwendung;
- Senden (702, 202) des Datenabrufs von der Anwendung zur Abfragemaschine;
- Erzeugen (704) einer Datenbankabfrage mit der Abfragemaschine unter Verwendung des Abrufs;
- Befragen (706) der Datenbank mit der Abfragemaschine unter Verwendung der Datenbankabfrage;
- Erzeugen (708) einer Datenbankantwort (866) mit der renationalen Datenbank unter Verwendung der Datenbankabfrage;
- Senden (710) der Datenbankantwort an die Abfragemaschine;
- Suchen nach einem Identifikator (712), der ausgewählt ist aus der Auflistung der Identifikatoren in der Datenbankantwort, wobei die Suche nach einem Identifikator, der aus der Auflistung von Identifikatoren in der Datenbankantwort ausgewählt ist, den Sperrtabellensuchindex verwendet;
- Substituieren (714,204) der Daten-Overlay für das eine oder die mehreren gesperrten Attribute in der Datenbankantwort, wenn der Identifikator gefunden wird;
- Senden der Datenbankantwort (866, 844) an die Anwendung (716, 206).

11. Verfahren nach Anspruch 10, wobei der Datenabruf als Reaktion auf eine Anwendereingabe in einem Unternehmessystem durchgeführt wird.

## Revendications

1. Système de bases de données (100, 404, 600, 800) comprenant :
- une base de données relationnelle (102, 402, 860) comprenant au moins une table de données (862, 864) ;
- une table de blocage (850) comprenant une liste d'identifiants pour identifier des tuples avec un ou plusieurs attributs bloqués, la table de blocage comprenant en outre une superposition de données (406, 868) pour la censure des un ou plusieurs attributs bloqués ;
- un moteur de recherche (846, 848) pour la formation de requêtes adressées à la base de données relationnelle ;
- une application (840) opérationnelle pour demander et recevoir des données venant du moteur de recherche ;
- une mémoire (610, 615, 812, 820, 832) pour le stockage d'instructions exécutables par machine (840, 846, 848, 860) pour la mise en oeuvre du système de bases de données ; et
- un processeur (605, 808, 816, 828, 916) pour l'exécution des instructions exécutables par machine, l'exécution des instructions amenant le processeur à :
- construire un index de recherche de table de blocage (932) à l'aide de la table de blocage ;
- générer (700) une demande de données (842) à l'aide de l'application ;
- envoyer (702, 202) la demande de données de l'application au moteur de recherche ;
- générer (704) une demande de base de données avec le moteur de recherche à l'aide de la demande ;
- interroger (706) la base de données avec le moteur de recherche à l'aide de la demande de base de données ;
- générer (708) une réponse de base de données (866) avec la base de données relationnelle à l'aide de la demande de base de données ;
- envoyer (710) la réponse de base de données au moteur de recherche ;
- rechercher (712) un identifiant sélectionné parmi la liste d'identifiants dans la réponse de base de données, où la recherche d'un identifiant sélectionné parmi la liste d'identifiants dans la réponse de base de données emploie l'index de recherche de table de blocage ;
- substituer (714, 204) la superposition de données pour un ou plusieurs attributs bloqués dans la réponse de base de données si l'identifiant est trouvé ;
- envoyer (716, 206) la réponse de base de données (866, 844) à l'application.

2. Système de bases de données selon la revendication 1, dans lequel la demande de données comprend un jeton d'identité, le système de bases de données comprenant en outre une table d'accès autorisés (926) comprenant une liste des jetons d'identité autorisés, dans lequel l'exécution des instructions amènent en outre le processeur à comparer le jeton d'identité avec la liste de jetons d'identité autorisés, dans lequel l'étape de substitution de la superposition de données pour les un ou plusieurs attributs bloqués dans la réponse de base de données est omise si le jeton d'identité est trouvé dans la liste de jetons d'identité autorisés.

3. Système de bases de données selon la revendication 2, dans lequel le jeton d'identité est l'un quelconque parmi les suivants : un identifiant d'utilisateur, un mot de passe, une clé cryptographique, une signature cryptographique, et des combinaisons de ceux-ci.

4. Système de bases de données selon la revendication 2 ou 3, dans lequel l'exécution des instructions amène en outre le processeur à construire un index de recherche de jetons autorisés (934), dans lequel la comparaison du jeton d'identité avec la liste de jetons d'identité autorisés est effectuée à l'aide de l'index de recherche de jetons autorisés.

5. Système de bases de données selon l'une quelconque des revendications précédentes, dans lequel le système de bases de données comprend une première connexion réseau (824) entre l'application et le moteur de recherche, dans lequel la demande de données est envoyée par la première connexion réseau, et dans lequel la réponse de base de données est envoyée par la première connexion réseau.

6. Système de bases de données selon l'une quelconque des revendications précédentes, dans lequel le système de bases de données comprend en outre une deuxième connexion réseau (836) entre le moteur de recherche et la base de données relationnelle, et dans lequel la base de données est interrogée à l'aide de la deuxième connexion réseau, et dans lequel la réponse de base de données est envoyée au moteur de recherche à l'aide de la deuxième connexion réseau.

7. Système de bases de données selon l'une quelconque des revendications précédentes, dans lequel la superposition de données est définie sur la base d'une politique de confidentialité des données.

8. Système de bases de données selon l'une quelconque des revendications précédentes, dans lequel les attributs bloqués incluent un nom et des données associées.

9. Produit de programme informatique comprenant des instructions exécutables par machine destinées à être exécutées par un processeur (605, 808, 816, 828, 916) mettant en oeuvre un système de bases de données (100, 404, 600, 800, 900), dans lequel le système de bases de données comprend une base de données relationnelle (102, 402, 860) comprenant au moins une table de données (862, 864), dans lequel le système de bases de données comprend en outre une table de blocage (850) comprenant une liste d'identifiants destinés à identifier des tuples avec un ou plusieurs attributs bloqués, dans lequel la table de blocage comprend en outre une superposition de données (406, 868) pour la censure des un ou plusieurs attributs bloqués, dans lequel le système de bases de données comprend en outre un moteur de recherche (846, 848) pour l'interrogation de la base de données relationnelle, dans lequel le système de bases de données comprend en outre une application (840) opérationnelle pour demander et recevoir des données venant du moteur de recherche, dans lequel l'exécution des instructions amène le processeur à :
- construire un index de recherche de table de blocage (932) à l'aide de la table de blocage ;
- générer (700) une demande de données (842) à l'aide de l'application ;
- envoyer (702, 202) la demande de données de l'application au moteur de recherche ;
- générer (704) une demande de base de données avec le moteur de recherche à l'aide de la demande ;
- interroger (706) la base de données avec le moteur de recherche à l'aide de la demande de base de données ;
- générer (708) une réponse de base de données (866) avec la base de données relationnelle à l'aide de la demande de base de données ;
- envoyer (710) la réponse de base de données au moteur de recherche ;
- rechercher (712) un identifiant sélectionné parmi la liste d'identifiants dans la réponse de base de données, où la recherche d'un identifiant sélectionné parmi la liste d'identifiants dans la réponse de base de données emploie l'index de recherche de table de blocage ;
- substituer (714, 204) la superposition de données pour un ou plusieurs attributs bloqués dans la réponse de base de données si l'identifiant est trouvé ;
- envoyer (716, 206) la réponse de base de données (866, 844) à l'application.

10. Procédé pour le fonctionnement d'un système de bases de données (100, 404, 600, 800, 900), dans lequel le système de bases de données comprend une base de données relationnelle (102, 402, 860) comprenant au moins une table de données (862, 864), dans lequel le système de bases de données comprend en outre une table de blocage (850) comprenant une liste d'identifiants pour identifier des tuples avec un ou plusieurs attributs bloqués, dans lequel la table de blocage comprend en outre une superposition de données (406, 868) pour la censure des un ou plusieurs attributs bloqués, dans lequel le système de bases de données comprend en outre un moteur de recherche (846, 848) pour la formation de requêtes adressées à la base de données relationnelle, dans lequel le système de bases de données comprend en outre une application (840) opérationnelle pour demander et recevoir des données venant du moteur de recherche, dans lequel le procédé comprend les étapes suivantes :
- construction d'un index de recherche de table de blocage (932) à l'aide de la table de blocage ;
- génération (700) d'une demande de données (842) à l'aide de l'application ;
- envoi (702, 202) de la demande de données de l'application au moteur de recherche ;
- génération (704) d'une demande de base de données avec le moteur de recherche à l'aide de la demande ;
- interrogation (706) de la base de données avec le moteur de recherche à l'aide de la demande de base de données ;
- génération (708) d'une réponse de base de données (866) avec la base de données relationnelle à l'aide de la demande de base de données ;
- envoi (710) de la réponse de base de données au moteur de recherche ;
- recherche (712) d'un identifiant sélectionné parmi la liste d'identifiants dans la réponse de base de données, où la recherche d'un identifiant sélectionné parmi la liste d'identifiants dans la réponse de base de données emploie l'index de recherche de table de blocage ;
- substitution (714, 204) de la superposition de données pour un ou plusieurs attributs bloqués dans la réponse de base de données si l'identifiant est trouvé ;
- envoi (716, 206) de la réponse de base de données (866, 844) à l'application.

11. Procédé selon la revendication 10, dans lequel la demande de données est effectuée en réponse à une opération d'utilisateur dans un système d'entreprise.
